(19) Europäisches Patentamt / European Patent Office / Office européen des brevets

(11) **EP 2 585 749 B1**

(12) **FASCICULE DE BREVET EUROPEEN**

(45) Date de publication et mention de la délivrance du brevet:
**23.03.2016 Bulletin 2016/12**

(21) Numéro de dépôt: **11729644.2**

(22) Date de dépôt: **10.06.2011**

(51) Int Cl.:
*F16L 9/04* (2006.01)          *F16L 9/147* (2006.01)
*B29C 70/56* (2006.01)         *B29C 63/24* (2006.01)
*E21B 17/01* (2006.01)

(86) Numéro de dépôt international:
**PCT/FR2011/000340**

(87) Numéro de publication internationale:
**WO 2011/161331 (29.12.2011 Gazette 2011/52)**

(54) **PROCÉDÉ DE FRETTAGE POUR RENFORCER UN TUBE À LA TENUE AXIALE ET À LA TENUE À LA PRESSION INTERNE**

WICKELSPANNUNGSVERFAHREN ZUR VERSTÄRKUNG DER AXIAL- UND DER INNENDRUCKSFESTIGKEIT EINES ROHRS

HOOP WINDING METHOD FOR REINFORCING THE AXIAL STRENGTH AND THE INTERNAL PRESSURE STRENGTH OF A TUBE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2010  FR 1002617**

(43) Date de publication de la demande:
**01.05.2013  Bulletin 2013/18**

(73) Titulaire: **IFP Énergies nouvelles
92852 Rueil-Malmaison Cedex (FR)**

(72) Inventeurs:
• **POIRETTE, Yann
F-38121 Reventin-Vaugris (FR)**
• **AVERBUCH, Daniel
F-69390 Vernaison (FR)**

(56) Documents cités:
**WO-A2-01/62477      FR-A1- 2 857 690
US-A- 6 146 482      US-A1- 2010 032 214**

**Description**

La présente invention concerne le domaine des tubes métalliques renforcés par frettage. Les tubes selon l'invention sont bien adaptés pour équiper une installation de forage en mer et/ou une installation de production d'un champ pétrolier en mer.

Pour forer un puits en mer ou pour produire un effluent pétrolier à partir d'un gisement situé en mer, on utilise une colonne montante, généralement appelée "riser", permettant de relier la tête de puits, située au niveau du fond marin, à un support situé en surface de la mer. Une colonne montante de forage ou de production est constituée par un ensemble d'éléments tubulaires, assemblés par des connecteurs. Les éléments tubulaires sont assemblés sur le lieu de forage ou de production, à partir d'un support flottant. La colonne descend dans la tranche d'eau au fur et à mesure de l'assemblage des éléments tubulaires, jusqu'à atteindre la tête de puits située sur le fond marin.

Dans l'optique de forer à des profondeurs d'eau pouvant atteindre 3500 m ou plus, le poids de la colonne montante devient très pénalisant. Ce phénomène est aggravé par le fait que, pour une même pression maximale de service, la longueur de la colonne impose un diamètre intérieur des conduites auxiliaires plus grand compte tenu de la nécessité de limiter les pertes de charge. L'utilisation de tubes frettés selon l'invention en tant que tube principal ou tube auxiliaire d'une colonne montante de forage permet d'en réduire significativement le poids et donc d'opérer à plus grande profondeur. D'une façon similaire, les colonnes montantes de production sont soumises à des sollicitations de plus en plus importantes liées à la pression et à leur poids, que la présente invention permet de réduire.

Il existe différentes méthodes de frettage qui permettent de renforcer un tube métallique en disposant des éléments de renfort composite, généralement sous forme d'une bande composée de fibres enrobées dans un polymère, sous contrainte autour du tube métallique. Le frettage permet d'augmenter la résistance mécanique du tube, sans augmenter son poids de manière significative compte tenu du faible poids des éléments de renfort.

Une technique de frettage, nommée frettage circonférentiel, consiste à enrouler un élément de renfort autour d'un tube métallique afin d'augmenter la résistance du tube à la pression interne. Par exemple, le document WO 82/01159 propose d'enrouler l'élément de renfort autour du tube métallique en y introduisant une tension. Ainsi, l'élément de renfort enroulé autour du tube est contraint en tension, ce qui introduit la mise sous contrainte du tube métallique. La précontrainte radiale subie par le tube est semblable à celle que produirait une pression extérieure.

Une autre technique de frettage, nommée frettage axial propose d'introduire des efforts de compression axiale dans le tube métallique et des efforts de traction axiale dans l'élément de renfort. Par exemple, le document US 2010/0032214 propose un dispositif composé d'une partie mobile axialement par rapport au tube métallique pour introduire des forces de traction dans l'élément de renfort et des forces de compression dans le tube métallique.

Par ailleurs, le document WO 01/62477 A2 propose une autre technique de frettage, pour laquelle on impose une pression sur la paroi interne du tube métallique dans le but de déformer le tube métallique.

La présente invention propose d'associer le frettage circonférentiel et le frettage axial pour cumuler les réductions de poids apportées par ces deux techniques. Cependant, cette association pose le problème de la réalisation des mises sous contrainte de la frette axiale et de la frette circonférentielle. En effet, le frettage axial conditionne principalement la tenue en traction du tube fretté, tandis que le frettage circonférentiel conditionne principalement la tenue du tube à la pression interne. Il est important que les opérations de frettage axial ne modifient pas ou peu les caractéristiques du frettage circonférentiel et, inversement, les opérations de frettage circonférentiel ne modifient pas ou peu les caractéristiques du frettage axial.

La présente invention propose une technique de frettage qui associe un renforcement circonférentiel et axial du tube métallique, tout en permettant d'introduire des précontraintes de compression radiale indépendamment des précontraintes de compression axiales dans le tube métallique.

De manière générale, la présente invention concerne un procédé de frettage pour fabriquer un tube renforcé, dans lequel on effectue les opérations suivantes :

a) on fournit un tube métallique, puis
b) on dépose une couche de renfort autour du tube métallique, la couche comportant des éléments allongés de renfort à la pression interne et à la traction axiale, puis
c) on impose une force de traction aux extrémités du tube métallique pour déformer plastiquement le tube métallique, la force étant orientée parallèlement à l'axe du tube métallique, la force étant déterminée pour introduire un effort de compression dans le tube métallique après relâchement de la force, et
d) on impose une pression sur la paroi interne du tube métallique pour déformer plastiquement le tube métallique, la pression étant déterminée pour introduire un effort de compression dans le tube métallique après relâchement de la pression,

le procédé étant caractérisé en ce qu'on fixe la valeur de ladite pression indépendamment de la valeur de ladite force de traction.

Selon l'invention, à l'opération c), on peut imposer la force de traction au moyen d'un vérin.

A l'étape d), on peut former une enceinte dans le tube métallique, une partie de l'enceinte étant constituée par ladite paroi interne du tube métallique, et on peut injecter un fluide sous pression dans l'enceinte. L'enceinte peut avoir une forme annulaire comprise entre la paroi interne du tube métallique et une deuxième paroi tubulaire disposée dans le tube métallique.

On peut réaliser simultanément les opérations c) et d).

Alternativement, on peut réaliser séquentiellement les opérations c) et d).

On peut solidariser la couche de renfort aux deux extrémités du tube métallique par des moyens de liaison.

A l'étape b), on peut déposer au moins une première partie des éléments allongés de renfort en formant un angle compris entre 0° et 45° par rapport à l'axe du tube et on peut déposer au moins une deuxième partie des éléments allongés de renfort en formant un angle compris entre 45° et 90° par rapport à l'axe du tube.

Alternativement, on peut déposer les éléments allongés en formant un angle compris entre 45° et 60°.

Le tube métallique peut être composé d'un acier, d'un alliage d'aluminium ou d'un alliage de titane.

Les éléments allongés peuvent être composés de fibres de renfort enrobées dans une matrice polymère. Les fibres de renfort peuvent être choisies parmi les fibres de verre, les fibres de carbone et les fibres d'aramide et dans lequel la matrice polymère peut être choisie parmi un polyéthylène, un polyamide, un polyétheréthercétone, un polypropylène, un polyfluorure de vinylidène et une époxyde.

L'invention comprend également le tube renforcé obtenu par le procédé selon l'invention.

D'autres caractéristiques et avantages de l'invention seront mieux compris et apparaîtront clairement à la lecture de la description faite ci-après en se référant aux dessins parmi lesquels :

- la figure 1 représente la structure d'un tube fretté,
- la figure 2 schématise un dispositif de frettage selon l'invention,
- les figures 3 et 4 schématisent des dispositifs de frettage axial selon l'invention,
- les figures 5 et 6 schématisent des dispositifs de frettage circonférentiel selon l'invention,
- la figure 7 représente un diagramme indiquant la résistance axiale et en pression de tubes.

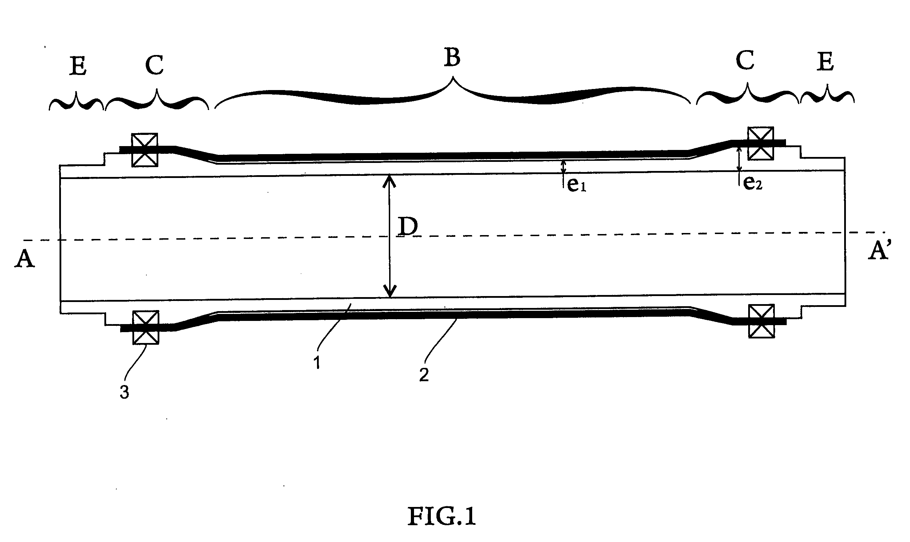

La figure 1 représente un tube métallique 1 d'axe AA', qui est renforcé par une couche de renfort 2. Le tube comporte une partie courante B d'épaisseur e1 sensiblement constante et d'un diamètre interne D sensiblement constant sur la longueur de la partie B. La partie B est encadrée de deux parties C qui permettent de faire coopérer le tube métallique avec les éléments de renfort 2. Les parties C peuvent être renforcées par exemple par une épaisseur e2 de métal plus important que l'épaisseur e1. Enfin les extrémités du tube 1 sont munies d'embouts de connexion E.

Le tube 1 peut être composé d'un acier, par exemple en acier X60, X80, X100. Le tube 1 peut être composé d'un alliage d'aluminium. Par exemple, on peut employer les alliages d'aluminium référencés 1050 1100 2014 2024 3003 5052 6063 6082 5083 5086 6061 6013 7050 7075 7055 par l'ASTM (American Standard for Testing and Material) ou les alliages d'aluminium commercialisés sous les références C405 CU31 C555 CU92 C805 C855 C70H par la société ALCOA. Le tube 1 peut également être composé d'un alliage de titane. Par exemple, on peut utiliser un alliage de titane Ti-6-4 (alliage comportant, en pourcent du poids, au moins 85% de titane, environ 6% d'aluminium et 4% de vanadium) ou l'alliage Ti-6-6-2 comportant en, pourcent du poids, environ 6% d'aluminium, 6% de vanadium et 2% d'étain et au moins 80% de titane.

La partie B du tube est généralement fabriquée à partir d'une ébauche laminée ou extrudée. Les parties C et E peuvent être des pièces obtenues par exemple par usinage, forgeage ou moulage. Les parties C et E peuvent être soudées à la partie B.

La couche de renfort 2 peut être constituée d'éléments de renforts, par exemple des éléments allongés (rubans ou fils), composés de fibres, par exemple des fibres de verre, de carbone ou d'aramide, les fibres étant enrobées dans, ou imprégnées par, une matrice polymère. La matrice polymère peut être en matériau thermoplastique tel que le polyéthylène, le polyamide (notamment le PA11, le PA6, le PA6-6 ou le PA12), le polyétheréthercétone (PEEK), le polypropylène (PP) ou le polyfluorure de vinylidène (PVDF). La matrice polymère peut également être en matériau thermodurcissable tel que les époxydes. Dans la présente description, un élément allongé désigne un élément dont une dimension est très grande par rapport aux autres. Les éléments de renforts sont déposés par couche sur le tube 1, c'est-à-dire en formant une gaine continue et d'épaisseur sensiblement constante sur la partie B et éventuellement sur une portion des parties C du tube 1.

On peut déposer des éléments de renfort sur la surface extérieure du tube 1 en formant un angle compris entre 45° et 60° pour renforcer axialement et radialement le tube métallique.

Alternativement, on peut déposer une partie des éléments de renfort sur la surface extérieure du tube 1 selon une direction sensiblement parallèle à l'axe AA' pour renforcer axialement le tube métallique, par exemple en formant un angle compris entre 0° et 45°, de préférence entre 0° et 30°, par rapport à l'axe AA'. Et on peut déposer l'autre partie des éléments de renfort sur la surface extérieure du tube 1 selon une direction sensiblement perpendiculaire à l'axe AA' pour renforcer radialement le tube métallique, par exemple en formant un angle compris entre 45° et 90°, de préférence entre 60° et 90° par rapport à l'axe AA'. Par exemple, on enroule hélicoïdalement des éléments de renfort autour du tube 1 pour former la couche de renfort 2.

De manière générale, pour équilibrer la tenue des éléments de renfort allongés, lorsqu'on dépose une quantité d'éléments selon un angle α on dépose une quantité équivalente d'élément selon un angle égal à -α. Dans la présente description, lorsqu'on spécifie un angle de pose α d'un élément allongé par rapport à l'axe du tube, on comprend qu'une partie des éléments allongé est posé avec un angle α et que l'autre partie est posée avec un angle -α par rapport à l'axe du tube.

La couche de renfort 2 peut être obtenue en alternant la pose d'éléments de renfort sensiblement perpendiculaire à l'axe AA' et d'éléments de renfort sensiblement parallèle à l'axe AA'. On peut également poser une première couche de renfort composée d'éléments de renforts sensiblement perpendiculaire à l'axe AA', puis on recouvre la première couche par une deuxième couche de renfort composée d'élément allongés posés sensiblement parallèle à l'axe AA'. Inversement, on peut également poser une première couche de renfort composée d'éléments de renforts sensiblement parallèle à l'axe AA', puis on recouvre la première couche par une deuxième couche de renfort composée d'élément allongés posés sensiblement perpendiculaire à l'axe AA'.

Selon l'invention, les éléments allongés de la couche de renfort 2 coopèrent avec le tube métallique 1 pour permettre le transfert des efforts entre le tube métallique 1 et la couche d'éléments de renfort 2. Par exemple, on peut lier solidairement la couche de renfort aux extrémités du tube 1, au niveau des parties C, par des moyens de liaison 3. Les moyens 3 forment une interface entre la couche de renfort 2 et le tube métallique 1. Lorsque le tube fretté est soumis à un effort de traction axiale, les moyens 3 permettent de transmettre l'effort de traction axiale conjointement au tube métallique 1 et à la couche de renfort 2. Ainsi, l'effort de traction est réparti ou partagé entre le tube métallique 1 et la couche de renfort 2.

Par exemple, le moyen de liaison 3 peut être un dispositif de type "Trap Lock" par exemple décrit dans le document US 6,042,152A. Les éléments de la couche de renfort sont pris et maintenus dans des rainures pratiquées au niveau des parties C du tube métallique.

Les rainures sont circonférentielles et perpendiculaires à l'axe AA' du tube.

Les moyens de liaison 3 peuvent également consister en un dispositif à pions décrit dans le document US 5,288,109. Des inserts métalliques ou pions traversent l'épaisseur de la couche de renfort au niveau des parties C du tube métallique. Les pions sont logés en partie dans des trous borgnes pratiqués dans la partie C du tube métallique.

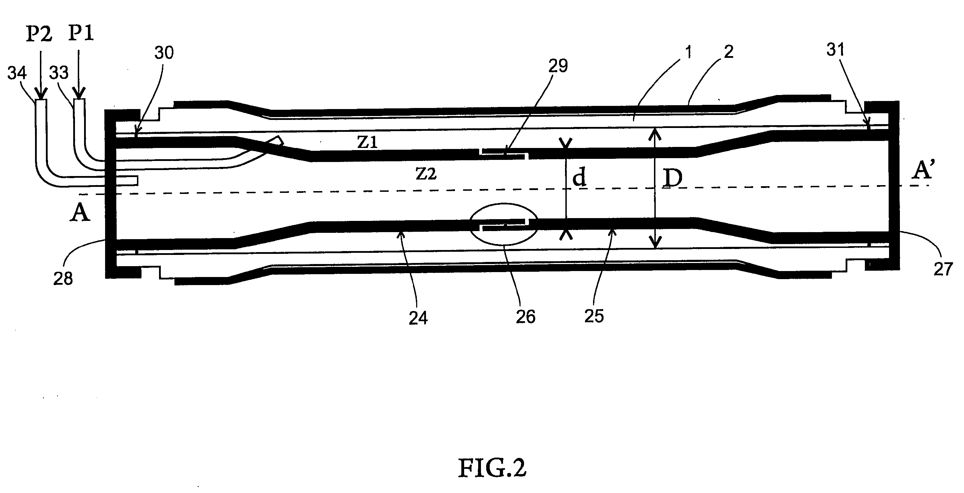

Le tube 1 muni de la couche de renfort 2 est inséré dans un dispositif de frettage tel que schématisé par la figure 2. Le dispositif est constitué de deux portions de tube 24 et 25 qui ont un diamètre d externe inférieur au diamètre D interne du tube 1. Les portions de tube 24 et 25 sont assemblés l'un à l'autre par la liaison 26 qui autorise un coulissement du tube 24 par rapport au tube 25. Par exemple la liaison 26 peut être un emboitement télescopique du tube 24 dans le tube 25. Les portions de tube 24 et 25 sont installées à l'intérieur du tube 1 sensiblement parallèle à son axe AA'. L'extrémité du tube 25 est obturée par le bouchon 27. Par exemple, le bouchon 27 est soudé sur l'extrémité du tube 25 opposé à la liaison 26. De la même manière l'extrémité du tube 24 est obturée par le bouchon 28. De plus, les bouchons 27 et 28 sont respectivement fixés solidairement aux extrémités du tube métallique 1, par exemple au moyen d'un serrage ou d'un vissage sur les embouts de connexion E référencés sur la figure 1.

Sur la figure 2, les joints d'étanchéités 29, 30 et 31 permettent de créer deux zones fermées distinctes. Le joint d'étanchéité 29 permet de rendre la liaison 26 entre les portions de tube 24 et 25 étanche. Le joint d'étanchéité 30 est disposé entre la surface externe de la portion de tube 24 et la surface interne du tube 1, de préférence au niveau de la partie renforcée C ou de l'embout E. Le joint d'étanchéité 31 est disposé entre la surface externe de la portion de tube 25 et la surface interne du tube 1, de préférence au niveau de la partie renforcée C ou de l'embout E. Ainsi, l'espace clos délimité par la surface interne du tube 1 et les surfaces externes des portions de tubes 24 et 25 et rendu étanche par les joints 29, 30 et 31 forme une première enceinte Z1. L'espace clos délimité par la surface interne des portions de tubes 24 et 25 et fermé par les bouchons 27 et 28 forme une deuxième enceinte Z2. Le tube 33 permet d'introduire un fluide sous une pression P1 dans l'enceinte Z1. Le tube 34 permet d'introduire un fluide sous une pression P2 dans l'enceinte Z2.

Pour mettre le tube métallique 1 et les éléments de renfort 2 sous contrainte, on applique une pression P1 et une pression P2 suffisamment grandes pour déformer plastiquement le tube métallique 1. On peut appliquer simultanément les pressions P1 et P2. On peut également appliquer une des pressions P1 ou P2, puis l'autre, par exemple P1 puis P2 ou P2 puis P1.

La pression P1 dans l'enceinte Z1 permet de déformer radialement le tube 1. En effet le fluide dans l'enceinte Z1 applique une pression sur la surface interne du tube 1. La pression interne appliquée sur la surface interne du tube 1 provoque une expansion radiale du tube 1. Lorsque la limite de déformation élastique est dépassée, le tube se déforme plastiquement et ne revient plus à sa forme initiale lorsque l'on réduit la pression P1. La déformation résiduelle du tube 1 induit des efforts de tension dans les couches circonférentielles du renfort 2 qui elles mêmes induisent des efforts de compression radiale, c'est à dire des efforts de compressions dirigés dans la direction des rayons, dans le tube métallique 1.

La pression P2 dans l'enceinte Z2 permet de déformer axialement le tube 1. En effet, le fluide dans l'enceinte Z2 impose une pression sur les bouchons 27 et 28 qui transmettent des forces de traction, parallèles à l'axe AA', aux extrémités du tube métallique 1. Les forces de traction T2 qui s'exercent sur les extrémités du tube 1 via l'enceinte Z2 soumis à une pression P2 est

$$T2 = P2\frac{\pi D^2}{4}$$ . Les forces de traction imposées au tube 1 provoquent un allongement du tube 1. Lorsque la limite de déformation élastique est dépassée, le tube se déforme plastiquement et ne revient plus à sa forme initiale lorsque l'on réduit la pression P2. La déformation résiduelle du tube 1 induit des efforts de tension dans les couches axiales de renfort 2 qui elles mêmes induisent des efforts de compression axiale, c'est-à-dire des efforts de compression dirigés selon l'axe AA', dans le tube métallique 1.

Le fait que les deux enceintes Z1 et Z2 sont distinctes et indépendantes permet d'appliquer des pressions P1 et P2 indépendamment l'une de l'autre. Ainsi, le procédé selon l'invention permet d'appliquer des précontraintes radiales et axiales indépendantes de façon à optimiser la tenue du tube fretté.

En appliquant une pression P1 dans l'enceinte Z1, on applique également une force de traction axiale aux extrémités du tube 1 du fait de l'effet de fond. Cette traction axiale dépend de la section annulaire de l'enceinte Z1 mesurée perpendiculairement à l'axe AA' au niveau du joint 29. Selon l'invention, on minimise la valeur de la section annulaire pour réduire l'effet de fond à un niveau inférieur, de préférence à une valeur au moins 50% inférieure à la valeur de la force T2 engendrée par la pression P2 dans l'enceinte Z2. La section annulaire peut être réduite en augmentant la valeur du diamètre d au niveau du joint. L'effet de fond induit par la mise en pression de l'enceinte Z1 n'empêche pas d'opérer selon l'invention en fixant indépendamment la pression P1 et P2 de manière à appliquer une force de traction T2 indépendamment de la pression P1.

De manière générale, la présente invention propose d'appliquer une traction T2 de frettage axiale dont la valeur peut varier et être fixée par l'utilisateur de manière indépendante de la valeur P1 de la pression de frettage radial. Par exemple, la pression de frettage radial P1 est appliquée par un premier moyen comportant une première enceinte mise sous pression et la traction de frettage T2 est appliquée par un deuxième moyen comportant une deuxième enceinte mise sous pression. Ainsi, on peut fixer une valeur P2 de frettage radial, puis on peut déterminer T2 sans tenir compte de la valeur de P2. Cela est possible car selon l'invention, on peut faire varier la pression P1 indépendamment de la pression P2.

L'invention peut également être mise en oeuvre en utilisant deux dispositifs distincts pour appliquer une force de traction T aux extrémités du tube métallique et une pression P sur la surface interne du tube métallique.

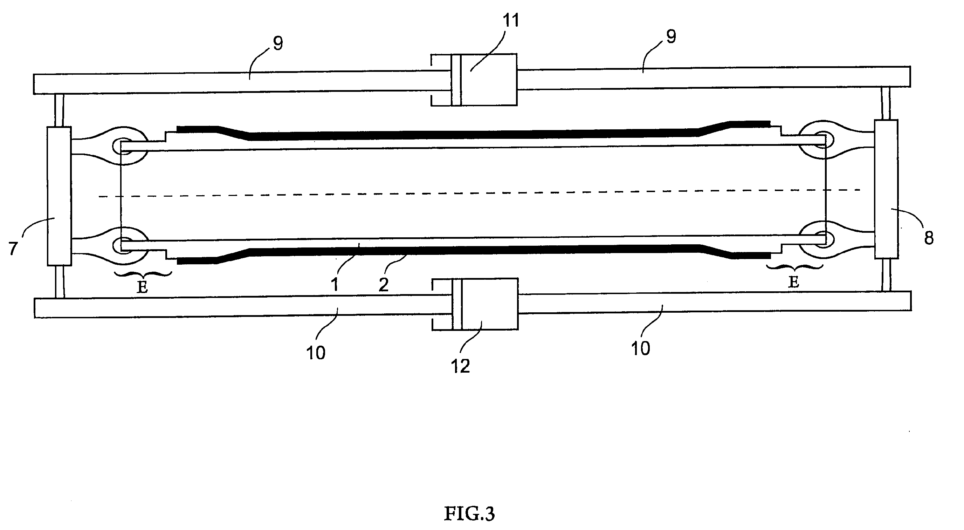

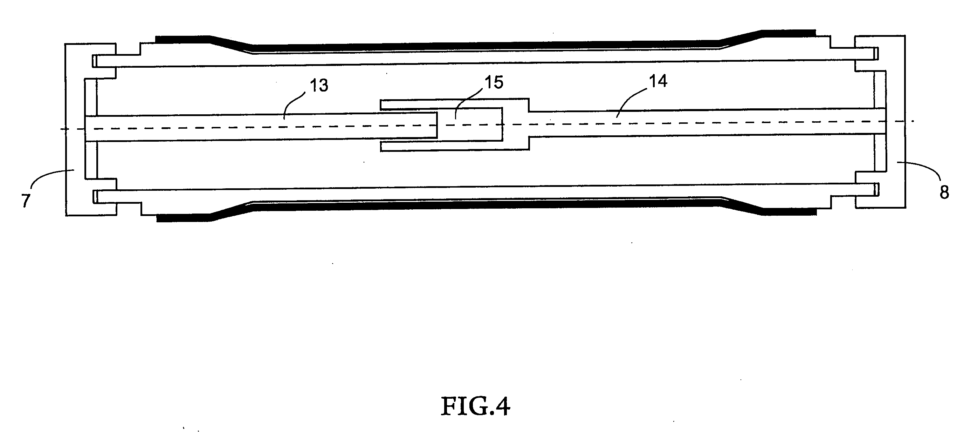

En référence aux figures 3 et 4, on installe le tube 1 recouvert d'une couche de renfort 2 sur un banc de traction. Les extrémités sont maintenues par des moyens de préhension 7 et 8, par exemple des pinces, un système vis écrous (les extrémités du tube 1 formant la vis, les moyens 7 et 8 étant les écrous). Les moyens de préhension 7 et 8 sont assemblés par un ou plusieurs vérins disposés à l'intérieur ou à l'extérieur du tube métallique 1. En référence à la figure 3, les vérins 11 et 12 reliés aux moyens de préhension 7 et 8 par les tiges 9 et 10 sont disposés à l'extérieur du tube 1. Les vérins 11 et 12 permettent d'appliquer un effort de traction T aux extrémités du tube métallique 1. En référence à la figure 4, l'ensemble constitué par le vérin 15 et les tiges 13 et 14 est installé à l'intérieur du tube 1. Le vérin 15 permet d'écarter les moyens de préhension 7 et 8 et d'appliquer un effort de traction T aux extrémités du tube 1. Les dispositifs décrits en référence aux figures 3 et 4 permettent d'appliquer un effort de traction axial au tube et, donc, d'effectuer une opération de frettage axial, sans induire d'efforts radiaux et, donc, sans induire de frettage radial.

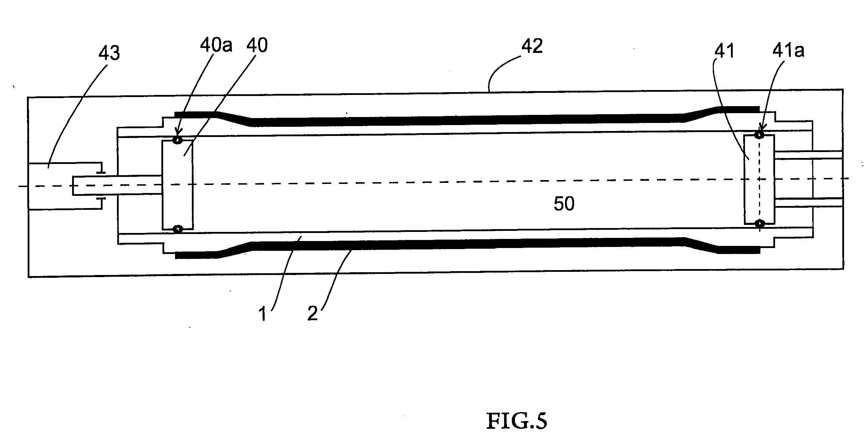

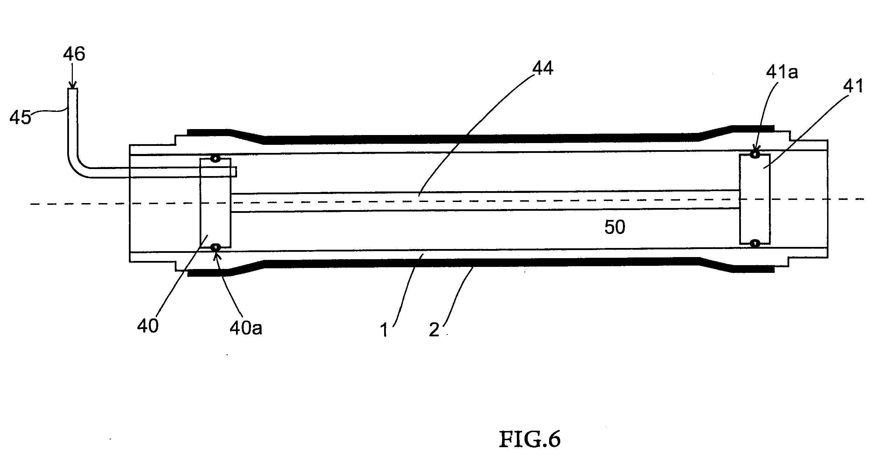

Les figures 5 et 6 représentent deux installations qui permettent d'appliquer une pression sur la paroi interne du tube métallique 1 recouvert de la couche de renfort 2. Les extrémités du tube métallique 1 sont fermées par les bouchons 40 et 41. Le joint d'étanchéité 40a, respectivement le joint 41a, assure l'étanchéité entre le bouchon 40, respectivement le bouchon 41, et la paroi interne du tube métallique 1. Ainsi, l'espace délimité par les bouchons 40, 41 et par la paroi interne du tube 1 forme une enceinte 50 fermée et étanche. En référence à la figure 5, le bouchon 41 est maintenu en position par le bâti 42. Le vérin 43 permet de déplacer selon l'axe du tube le bouchon 40. On dispose un fluide sensiblement incompressible dans l'enceinte 50, puis on actionne le vérin 43 pour imposer une pression P dans l'enceinte 50 et donc sur la paroi interne du tube métallique 1. En référence à la figure 6, le bouchon 41 est solidairement lié au bouchon 40 par une ou plusieurs tiges 44. Le piquage 45 permet d'introduire un fluide sous pression dans l'enceinte 50 de manière à appliquer une pression P sur la paroi interne du tube métallique 1. Les dispositifs décrits en référence aux figures 5 et 6 permettent d'appliquer une pression interne au tube et, donc, d'effectuer une opération de frettage radial, sans induire d'efforts de traction axial et, donc, sans induire de frettage radial.

On peut mettre en oeuvre l'un des dispositifs décrits en référence aux figures 3 et 4 pour introduire des précontraintes de compression dirigées selon l'axe AA' dans le tube métallique 1. Et on peut mettre en oeuvre l'un des dispositifs décrits en référence aux figures 5 et 6 pour induire des précontraintes de compression radiale dans le tube métallique 1.

Les exemples numériques présentés ci-après illustrent l'intérêt de la technique de frettage selon l'invention.

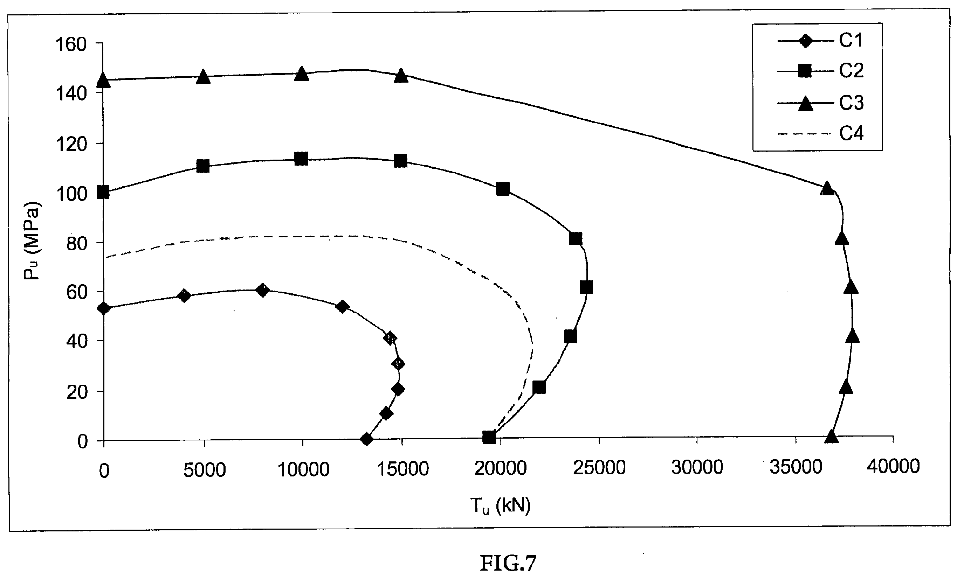

La figure 7 montre la tenue mécanique d'un tube, l'axe des abscisses Tu indiquant la tension en kN, l'axe des ordonnées Pu indiquant la pression interne en MPa.

On considère un tube de diamètre interne 14" (0,3556 m) et d'épaisseur 14,5mm en acier de limite élastique 740 MPa.

La courbe C1 avec des losanges noirs indique l'enveloppe de la tenue du tube sans frettage.

Le même tube en acier est recouvert d'une couche de frettage circonférentiel épaisse de 10 mm et d'une couche de frettage axial épaisse de 10 mm. Le tube est fretté selon le procédé de l'invention en appliquant une pression P1 de 1070 bar et une traction T2 de 18 mega Newton.

La courbe C2 avec des carrés montre l'enveloppe de la tenue élastique du tube fretté. La courbe C3 avec des triangles montre l'enveloppe de la tenue à rupture du tube fretté.

En comparaison, la courbe C4 en trait discontinu montre la tenue élastique d'un tube de diamètre interne 14" (0,3556 m) et d'épaisseur 21 mm en acier de limite élastique 740 MPa, sans frettage.

En comparant les courbes C2 et C4, on observe que le tube fretté d'épaisseur 14,5 mm a une limite élastique en tension seule équivalente à celle du tube d'épaisseur 21 mm sans frettage et en pression interne seule supérieure à celle du tube fretté d'épaisseur 21 mm sans frettage.

**Revendications**

**1.** Procédé de frettage pour fabriquer un tube renforcé, dans lequel on effectue les opérations suivantes :

a) on fournit un tube métallique (1), puis
b) on dépose une couche de renfort (2) autour du tube métallique (1), la couche comportant des éléments allongés de renfort à la pression interne et à la traction axiale, puis
c) on impose une force de traction aux extrémités du tube métallique (1) pour déformer plastiquement le tube métallique, la force étant orientée parallèlement à l'axe du tube métallique, la force étant déterminée pour introduire un effort de compression dans le tube métallique après relâchement de la force, et
d) on impose une pression sur la paroi interne du tube métallique (1) pour déformer plastiquement le tube métallique, la pression étant déterminée pour introduire un effort de compression dans le tube métallique après relâchement de la pression,
et dans lequel on fixe la valeur de ladite pression indépendamment de la valeur de ladite force de traction.

**2.** Procédé selon la revendication 1, dans lequel à l'opération c), on impose la force de traction au moyen d'un vérin.

**3.** Procédé selon l'une des revendications 1 et 2, dans lequel à l'étape d) on forme une enceinte dans le tube métallique (1), une partie de l'enceinte étant constituée par ladite paroi interne du tube métallique, et on injecte un fluide sous pression dans l'enceinte.

**4.** Procédé selon la revendication 3, dans lequel l'enceinte a une forme annulaire comprise entre la paroi interne du tube métallique (1) et une deuxième paroi tubulaire (24; 25) disposée dans le tube métallique (1).

**5.** Procédé selon la revendication 1, dans lequel on réalise simultanément les opérations c) et d).

**6.** Procédé selon la revendication 1, dans lequel on réalise séquentiellement les opérations c) et d).

**7.** Procédé selon l'une des revendications précédentes, dans lequel on solidarise la couche de renfort (2) aux deux extrémités du tube métallique (1) par des moyens de liaison (3).

**8.** Procédé selon l'une des revendications précédentes, dans lequel à l'étape b) on dépose au moins une première partie des éléments allongés de renfort en formant un angle compris entre 0° et 45° par rapport à l'axe du tube et on dépose au moins une deuxième partie des éléments allongés de renfort en formant un angle compris entre 45° et 90° par rapport à l'axe du tube.

**9.** Procédé selon l'une des revendications 1 à 7, dans lequel à l'étape b), on dépose les éléments allongés de renfort en formant un angle compris entre 45° et 60°.

**10.** Procédé selon l'une des revendications précédentes, dans lequel le tube métallique est composé d'un acier, d'un alliage d'aluminium ou d'un alliage de titane.

**11.** Procédé selon l'une des revendications précédentes, dans lequel les éléments allongés sont composés de fibres de renfort enrobées dans une matrice polymère.

**12.** Procédé selon la revendication 11, dans lequel les fibres de renfort sont choisies parmi les fibres de verre, les fibres de carbone et les fibres d'aramide et dans lequel la matrice polymère est choisie parmi un polyéthylène, un polyamide, un polyétheréthercétone, un polypropylène, un polyfluorure de vinylidène et une époxyde.

**13.** Tube renforcé obtenu selon l'une des revendications précédentes.

**Patentansprüche**

**1.** Wickelspannungsverfahren zur Herstellung eines verstärkten Rohrs, wobei die folgenden Vorgänge durchgeführt werden:

a) Bereitstellen eines Metallrohrs (1), dann
b) Ablagern einer Verstärkungsschicht (2) um das Metallrohr (1), wobei die Schicht längliche Elemente zur Verstärkung der Innendruckfestigkeit und der axialen Zugfestigkeit umfasst, dann
c) Anlegen einer Zugkraft an den Enden des Metallrohrs (1), um das Metallrohr plastisch zu verformen, wobei die Kraft parallel zur Achse des Metallrohrs ausgerichtet ist, wobei die Kraft bestimmt ist, um nach der Druckentlastung eine Kompressionsspannung in das Metallrohr einzuführen, und
d) Anlegen eines Drucks auf die Innenwand des Metallrohrs (1), um das Metallrohr plastisch zu verformen, wobei der Druck bestimmt wird, um nach der Druckentlastung eine Kompressionsspannung in das Metallrohr einzuführen, und wobei der Wert des Drucks unabhängig von dem Wert der Zugkraft festgelegt wird.

2. Verfahren nach Anspruch 1, wobei in Vorgang c) die Zugkraft mithilfe einer Winde angelegt wird.

3. Verfahren nach einem der Ansprüche 1 und 2, wobei in Schritt d) ein Behälter in dem Metallrohr (1) gebildet wird, wobei ein Teil des Behälters aus der Innenwand des Metallrohrs besteht und ein mit Druck beaufschlagtes Fluid in den Behälter injiziert wird.

4. Verfahren nach Anspruch 3, wobei der Behälter eine ringförmige Form aufweist, die zwischen der Innenwand des Metallrohrs (1) und einer zweiten röhrenförmigen Wand (24; 25), die in dem Metallrohr (1) angeordnet ist, eingeschlossen ist.

5. Verfahren nach Anspruch 1, wobei die Vorgänge c) und d) gleichzeitig ausgeführt werden.

6. Verfahren nach Anspruch 1, wobei die Vorgänge c) und d) nacheinander ausgeführt werden.

7. Verfahren nach einem der vorhergehenden Ansprüche, wobei die Verstärkungsschicht (2) an zwei Enden des Metallrohrs (1) durch Verbindungsmittel (3) befestigt ist.

8. Verfahren nach einem der vorhergehenden Ansprüche, wobei in Schritt b) mindestens ein erster Teil der länglichen Verstärkungselemente abgelagert wird, indem ein Winkel im Bereich zwischen 0° und 45° in Bezug auf die Achse des Rohrs gebildet wird, und mindestens ein zweiter Teil der länglichen Verstärkungselemente abgelagert wird, indem ein Winkel im Bereich zwischen 45° und 90° in Bezug auf die Achse des Rohrs gebildet wird.

9. Verfahren nach einem der Ansprüche 1 bis 7, wobei in Schritt b) die länglichen Verstärkungselemente abgelagert werden, indem ein Winkel im Bereich zwischen 45° und 60° gebildet wird.

10. Verfahren nach einem der vorhergehenden Ansprüche, wobei das Metallrohr aus einem Stahl, einer Aluminiumlegierung oder einer Titanlegierung besteht.

11. Verfahren nach einem der vorhergehenden Ansprüche, wobei die länglichen Elemente aus Verstärkungsfasern bestehen, die mit einer Polymermatrix ummantelt sind.

12. Verfahren nach Anspruch 11, wobei die Verstärkungsfasern ausgewählt sind aus Glasfasern, Carbonfasern und Aramidfasern und wobei die Polymermatrix ausgewählt ist aus Polyethylen, Polyamid, Polyetheretherketon, Polypropylen, Polyvinylidenfluorid und Epoxid.

13. Verstärktes Rohr, das nach einem der vorhergehenden Ansprüche erhalten wurde.

**Claims**

1. A hoop winding method for manufacturing $\alpha$ reinforced tube, wherein the following operations are carried out:

a) providing $\alpha$ metal tube (1), then
b) depositing $\alpha$ reinforcing layer (2) around metal tube (1), the layer comprising elongate internal pressure and axial traction reinforcement elements, then
c) imposing $\alpha$ tensile force at the ends of metal tube (1) so as to plastically deform the metal tube, the force being oriented parallel to the metal tube axis, the force being determined to introduce $\alpha$ compressive stress in the metal tube after release of the force, and
d) imposing $\alpha$ pressure onto the inner wall of metal tube (1) so as to plastically deform the metal tube, the pressure being determined to introduce $\alpha$ compressive stress in the metal tube after release of the pressure, and wherein the value of said pressure is set independently of the value of said tensile force.

2. A method as claimed in claim 1 wherein, in operation c), the tensile force is imposed using $\alpha$ jack.

3. A method as claimed in any one of claims 1 and 2 wherein, in stage d), an enclosure is formed in metal tube (1), part of the enclosure being made up of said inner wall of the metal tube, and α fluid under pressure is injected into the enclosure.

4. A method as claimed in claim 3, wherein the enclosure has an annular shape contained between the inner wall of metal tube (1) and α tubular second wall (24; 25) arranged in metal tube (1).

5. A method as claimed in claim 1, wherein operations c) and d) are carried out simultaneously.

6. A method as claimed in claim 1, wherein operations c) and d) are carried out sequentially.

7. A method as claimed in any one of the previous claims, wherein reinforcing layer (2) is secured to the two ends of metal tube (1) by linking means (3).

8. A method as claimed in any one of the previous claims wherein, in stage b), at least α first part of the elongate reinforcing elements is deposited by forming an angle ranging between 0° and 45° to the tube axis, and at least α second part of the elongate reinforcing elements is deposited by forming an angle ranging between 45° and 90° to the tube axis.

9. A method as claimed in any one of claims 1 to 7 wherein, in stage b), the elongate reinforcing elements are deposited by forming an angle ranging between 45° and 60°.

10. A method as claimed in any one of the previous claims, wherein the metal tube is made from steel, an aluminium alloy or α titanium alloy.

11. A method as claimed in any one of the previous claims, wherein the elongate elements consist of reinforcing fibers coated with α polymer matrix.

12. A method as claimed in claim 11, wherein the reinforcing fibers are selected from among glass fibers, carbon fibers and aramid fibers, and the polymer matrix is selected from among α polyethylene, α polyamide, α polyether ether ketone, α polypropylene, α polyvinylidene fluoride and an epoxide.

13. A reinforced tube obtained according to any one of the previous claims.

FIG.1

**FIG.2**

EP 2 585 749 B1

FIG.3

FIG.4

FIG.5

FIG.6

EP 2 585 749 B1

FIG.7

## RÉFÉRENCES CITÉES DANS LA DESCRIPTION

**Documents brevets cités dans la description**

- WO 8201159 A
- US 20100032214 A
- WO 0162477 A2
- US 6042152 A
- US 5288109 A